# EUROPÄISCHE PATENTSCHRIFT

(11) **EP 0 342 514 B1**
(45) Veröffentlichungstag und Bekanntmachung des Hinweises auf die Patenterteilung: **19.01.1994**
(21) Anmeldenummer: 89108444.4
(22) Anmeldetag: 10.05.1989
(51) Int. Cl.: A61C 7/02, B21F 15/00

(54) **Gerät zum Fixieren eines Bogens zur Korrektur von Zahn-Fehlstellungen**
Device for fastening an orthodontic bow
Dispositif pour la fixation d'un arc orthodontique

(30) Priorität: 19.05.1988 CH 1894/88
(43) Veröffentlichungstag der Anmeldung: 23.11.1989
(73) Patentinhaber: Reinhard, Peter, 8953 Dietikon (CH); Hübers, Ulrich, Dr., D-77652 Offenburg (DE)
(72) Erfinder: Reinhard, Peter, 8953 Dietikon (CH); Hübers, Ulrich, Dr., D-77652 Offenburg (DE)
(74) Vertreter: EGLI-EUROPEAN PATENT ATTORNEYS

(56) Entgegenhaltungen:
- FR-A- 2 481 595
- GB-A- 266 596
- US-A- 2 416 002
- US-A- 3 596 357

## Beschreibung

Die Erfindung betrifft ein Gerät nach dem ersten Teil von Anspruch 1.

In der Kieferorthopädie ist die Verwendung eines Drahtbogens zur Korrektur von Zahn-Fehlstellungen eines Gebisses einer sog. Band-Bogenapparatur ein bekanntes Verfahren. Hierzu werden an der Labial- bzw. Lingualfläche der Zähne Halterplatten, sog. Brackets, befestigt, in denen ein Schloss ausgespart ist, in welches der Drahtbogen eingelegt werden kann. Damit die Kraft des Bogens auf die Zähne übertragen werden kann, ist es erforderlich, diesen Bogen an den Halterplatten zu fixieren. Diese Fixierung kann auf verschiedene Art und Weise erreicht werden, beispielsweise durch Gummiringe oder feine Drähte, welch letztere Fixierung als Ligatur bezeichnet wird.

Das Anlegen und Fixieren eines solchen Drahtbogens ist eine verhältnismässig aufwendige Arbeit, insbesondere dann, wenn eine Korrektur der Zähne sowohl des Oberkiefers als auch des Unterkiefers vorgesehen werden muss.

Für die Ligaturen bedient man sich feiner Drähte mit einer Stärke von einigen Zehntel Millimeter, beispielsweise 0,2-0,3 mm, die um die Halterplatten gelegt und deren Enden zum Spannen des Drahtes verdrillt werden. Der Ligaturendraht legt sich hierbei über den Bogen und erstreckt sich unterhalb zweier an den Halterplatten angeordneten Flügel, damit er nicht abgestreift werden kann.

Die Fixierung geschieht in der Regel mit einem Nadelhalter, in den ein Ligaturdraht eingespannt wird.

Es sind jedoch auch Geräte bekannt geworden mit einem Spannkopf, mit welchen Drahtenden gefasst werden und der dann durch eine Zugbewegung in Rotation versetzt wird, sodass die besagten Enden verdrillt werden.

Insbesondere ist ein Gerät gemäss dem Oberbegriff des Anspruchs 1 bekannt (FR-A-2 481 595), mit einem Spannkopf, der einen in Umfangsrichtung gerillten Konus am Ende eines Drehstabes umfasst, über welchen eine Hülse mit entsprechend dimensioniertem Innenkonus gestülpt ist, die mittels eines drehbar und unverschieblich am Drehstab befestigten Rings, welcher über ein Gewinde mit der Hülse eingreift, axial verschiebbar ist. Die Hülse wird durch Drehen des Rings nach vorn geschoben, dann werden die vorverdrillten Enden des Ligaturendrahtes zwischen Konus und Hülse geschoben und durch Zurückziehen der Hülse mittels des Ringes festgeklemmt, worauf durch eine Zugbewegung der Spannkopf in Drehung versetzt und der Ligaturendraht durch weiteres Verdrillen seiner Enden angezogen wird.

Durch dieses Gerät kann zwar das Festziehen des Ligaturendrahtes beschleunigt werden, jedoch ist die Befestigung seiner Enden am Spannkopf sowie das nachträgliche Lösen derselben verhältnismässig langwierig, da die Hülse durch Drehen des Ringes gelockert und wieder festgezogen werden muss, sodass mindestens ein Teil der gewonnenen Zeit wieder verloren geht.

Aus der US-A-2 416 002 ist ein prinzipiell ähnlich aufgebautes Gerät zum Verdrillen von Drähten bekannt, bei welchem der Spannkopf zangenartig ausgebildet und derart federbelastet ist, dass er normalerweise geöffnet ist. Während des Verdrillens der Drähte muss der Spannkopf daher über zwei Handgriffe gegen die Federkraft geschlossen gehalten werden, sodass beidhändig gearbeitet und ausserdem verhältnismässig viel Kraft aufgewendet werden muss. Ausserdem ist die Konstruktion verhältnismässig kompliziert und aufwendig, insbesondere erfordert sie mehrere Kugellager.

Die Erfindung soll ein gattungsgemässes Gerät schaffen, bei welchem das Fassen der Enden des Ligaturendrahtes zuverlässig und trotzdem sehr rasch und einfach vonstatten gehen kann, sodass dabei nur wenig Zeit verloren und die für den Patienten unangenehme Operation möglichst rasch abgeschlossen wird. Weitere Vorteile der Erfindung liegen in der Einfachheit und grossen Funktionssicherheit des Geräts.

Im folgenden wird die Erfindung anhand von ein Ausführungsbeispiel darstellenden Zeichnungen naher erläutert.

Es zeigen:
- Fig. 1: Einen Längsschnitt eines als Stab ausgebildeten Gerätes zum Anbringen von Ligaturendrähten an Brackets zum Fixieren eines Bogens zur Korrektur von Zähnen und
- Fig. 2: Eine Seitenansicht eines Ligaturendrahtes, der mit dem Gerät nach Fig. 1 zum Fixieren des Bogens verwendet werden kann.

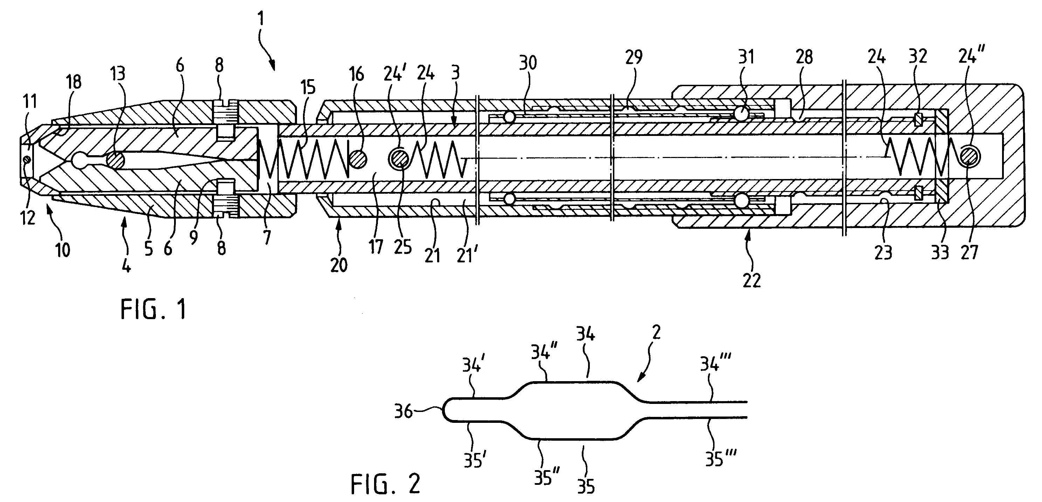

Das in Fig. 1 dargestellte Gerät 1 und der in Figur 2 dargestellte Ligaturendraht 2 sind in vergrössertem Massstab dargestellt. Das Gerät 1, das nachfolgend als Twister 1 bezeichnet wird, weist Stabform auf und weist einen innenliegenden Drehstab 3 auf, an welchem ein Spannkopf 4 gelagert ist.

Der Spannkopf 4 setzt sich aus einer Hülse 5 und zwei Spannbacken 6 zusammen. Die Spannbacken 6 sind im Drehstab 3 an dessen Ende gelagert. Hierzu ist am Ende des Drehstabes 3 ein Schlitz 7 vorgesehen, in welchem die plättchenförmigen Spannbacken 6 schwenkbar gelagert sind. Die Spannbacken 6 sind an ihrem inneren Ende durch je einen Gewindebolzen 8 gehalten, welcher in die Hülse 5 eingeschraubt ist und radial einwärts in eine Vertiefung 9 der Spannbacken 6 ragt.

Der in dem Drehstab 3 ausgesparte Schlitz 7 erstreckt sich nicht bis zum Ende 10 des Drehstabes 3; der Drehstab 3 ist an dieser Stelle konisch ausgebildet und weist eine Oeffnung 11 auf, die von einem Stift 12 durchquert wird. Ein weiterer im Drehstab 3 gelagerter Stift 13 durchquert den Schlitz 7 und trennt die beiden Spannbacken 6.

Auf das innenseitige Ende der Spannbacken 6 wirkt eine Druckfeder 15 mit ihrem einen Ende, während ihr anderes Ende sich an einen im Drehstab 3 gelagerten Lagerstift 16 abstützt, der die Längsbohrung 17 des Drehstabes 3 durchquert. Durch die Druckfeder 15 werden die Spannbacken 6 gegen den Innenkonus des konischen Endes 10 gedrückt, wobei sie eine Klemmwirkung ausüben. Zwischen den Backen können die Enden des in Fig. 2 dargestellten Ligaturdrahtes gelegt und geklemmt werden. Zum Einlegen des Ligaturendrahtes zwischen die Spannbacken 6 wird die Hülse 5 zurückgeschoben, wodurch die Spannbacken sich längs des weiteren Stiftes 13 bewegen und entsprechend der Ausbildung ihrer Innenkontur gespreizt werden, sodass der Ligaturendraht 2 eingelegt werden kann.

Der Drehstab 3 ist von einem hülsenförmigen Handrohr 20 umgeben, dessen Innenbohrung 21 einen grösseren Durchmesser aufweist als der Aussendurchmesser des Drehstabes 3, sodass ein Ringraum 21′ zwischen der Innenwand des Handrohrs 20 und dem Aussendurchmesser des Drehstabes 3 entsteht.

Das Handrohr 20 ist an seinem, dem Spannkopf 4 abgewandten Ende mit einem nach aussen abgeschlossenen Endrohr 22 verbunden, dessen Innendurchmesser 23 etwa dem Durchmesser der Innenbohrung 21 des Handrohrs 20 entspricht.

Die Längsbohrung 17 des Drehstabes 3 wird von einer Zugfeder 24 durchquert, von welcher das eine Ende 24′ in einem die Bohrung 17 des Drehstabes 3 durchquerenden Haltestab 25 und das andere Ende 24˝ in einem dem Boden des Endrohres 22 gelagerten weiteren Haltestift 27 gelagert ist. Am endrohrseitigen Ende des Drehstabes 3 sind Gewindegänge 28 mit halbkreisförmigem Querschnitt eingearbeitet, während auf der Innenwand des Handrohrs 20 entsprechende Gewindegänge 29 mit annähernd halbkreisförmigem Querschnitt vorgesehen sind. Die Gewindegänge 28 und 29 können ein-, zwei- oder mehrgängig ausgebildet sein. Auch kann die Steigung der Gewindegänge 28, 29 veränderlich, z. B. mit zunehmender Steigung ausgebildet sein.

Zwischen den Gewindegängen 28, 29 ist ein Kugelkäfig 30 mit Kugeln 31 gelagert, der die Verbindung zwischen den Gewindegängen 28, 29 herstellt und beim Verschieben des Handrohrs 20 oder des Endrohrs 22 eine Drehung des Drehstabes 3 bewirkt. In Fig. 1 sind nur vier Kugeln 31 dargestellt, jedoch sind in Wirklichkeit über dem ganzen Kugelkäfig eine Anzahl weiterer Kugeln 31 angeordnet.

Am endrohrseitigen Ende des Drehstabes 3 ist ein Anschlag 32, beispielsweise ein Sprengring 32 befestigt, der den Hub zwischen dem Drehrohr 3 und dem Handrohr 20 bzw. dem Endrohr 22 begrenzt. Im Grund des Endrohrs 22 ist eine Scheibe 33 eingelegt, die den Auftreffschlag des Drehrohres 3 dämpft.

Das Fixieren des Bogens an die Brackets mit Hilfe des beschriebenen Gerätes gemäss Fig. 2 verläuft wie folgt:
Nach dem Zurückziehen der Hülse 5 und dem Einlegen des Ligaturendrahtes 2 zwischen die Backen 6 wird die Hülse 5 wieder freigegeben, sodass sie in die in Fig. 1 dargestellte Lage zurückgleitet. Nun wird mit Hilfe des Gerätes 1 der Ligaturendraht 2 nach Verlegen des Bogens für die Korrektur der Zähne über einen der Brackets gelegt, worauf das Handrohr 20 oder das Endrohr 22 zurückgezogen wird. Dadurch wird eine Drehbewegung des Spannkopfes 4 bewirkt, durch welche die Enden des Ligaturendrahtes 2 verdrillt werden und gleichzeitig der Ligaturendraht 2 satt an die Brackets gelegt und dadurch der Bogen fixiert wird.

Der für die Verwendung mit dem Gerät 1 vorgesehene Ligaturendraht 2 ist, wie aus Fig. 2 erkennbar ist, als zweischenkliche Schlaufe ausgebildet, deren Schenkel 34, 35 durch einen Steg 36 miteinander verbunden sind. Im Bereich des Steges 36 weisen die Schenkelpartien 34′, 35′ einen kleineren Abstand auf als in der daran anschliessenden Mittelpartie 34˝ und 35˝. Die Endpartien 34‴, 35‴ der Schenkel 34, 35 verlaufen etwa parallel zueiander und weisen einen kleineren Abstand auf als die andern Schenkelpartien. Wesentlich ist, dass zwischen den Endpartien der Schenkel 34, 35 ein Abstand besteht, der etwas grösser als der Durchmesser des Stiftes 12 ist, der im konischen Ende 10 des Drehstabes 3 angeordnet ist.

Da der Ligaturendraht 2 in grossen Stückzahlen benötigt wird, muss er zweckmässig bereitgestellt werden, was z.B. mit einem Dispenser, der jeweils einen Ligaturendraht abgibt, erreicht werden kann.

## Patentansprüche

1. Stabförmiges Gerät zum Fixieren eines aus Draht geformten Bogens zur Korrektur von Zahnfehlstellungen des menschlichen Gebisses an Halterplatten (Brackets), welche auf den Labial- oder Lingualflächen der Zähne befestigt sind mittels eines Ligaturendrahts (2) durch Verdrillen der Enden desselben mit einem am Vorderende eines Drehstabes (3) befestigten Spannkopf (4) zum Fassen des Ligaturendrahtes (2), wobei der Drehstab (3) derart in einem Handrohr (20) gelagert ist, dass er durch Zurückziehen desselben in Drehung versetzbar ist, **dadurch gekennzeichnet, dass** der Spannkopf (4) ein Paar von Spannbacken (6) aufweist, welche in einem am Ende des Drehstabes (3) ausgesparten Schlitz (7) mit einem zwischen den Spannbacken (6) durchragenden Stift (13) des Drehstabes (3) gelagert sind und von einer am Drehstab (3) abgestützten Feder (15) gegen einen Innenkonus (18) des Drehstabes (3) am Vorderende des Schlitzes (7) gepresst und dadurch aneinandergedrückt werden, während eine das Ende des Drehstabes (3) umgebende Hülse (5) in Vertiefungen (9) der Spannbacken (6) eingreift, sodass ein Zurückziehen der Spannbacken (6) gegen die Kraft der Feder (15) und entsprechend der Ausbildung der Innenkontur der Spannbacken (6) ein Spreizen derselben durch den Stift (13) bewirkt.

2. Gerät nach Anspruch 1, **dadurch gekennzeichnet, dass** der Drehstab (3) Gewindegänge aufweist, die über einen mit Kugeln (31) bestückten Kugelkäfig (30) mit ein- oder mehrgängigen Gewindegängen (29) des Handrohrs (20) zusammenwirken und bei axialer Verschiebung des Handrohrs (20) oder eines mit dem Handrohr (20) verbundenen Endrohrs (22) dem Drehstab (3) eine Drehung erteilen.

3. Gerät nach Anspruch 2, **dadurch gekennzeichnet, dass** die Gewindegänge mit variabler Steigung, z. B. mit zunehmender Steigung ausgebildet sind.

4. Gerät nach Anspruch 1 oder 2, **dadurch gekennzeichnet, dass** der Drehstab (3) als Drehrohr ausgebildet und mit dem einen Ende (24') einer im Innern (17) angeordneten Zugfeder (24) verbunden ist, wobei das andere Ende (24'') der Zugfeder (24) mit dem Handrohr (20) bzw. mit dem mit dem Handrohr verbundenen Endrohr (22) verbunden ist.

## Claims

1. A rod-shaped apparatus for fixing an arch, formed from wire and for correcting the defective positions of human teeth, on holder plates (brackets) which are secured to the labial and lingual surfaces of the teeth by means of a ligature wire (2) by twisting the ends of the same, the apparatus having a gripping head (4) secured to the front end of a torsion rod (3) and for grasping the ligature wire (2), wherein the torsion rod (3) is mounted in a hand tube (20) in such a manner, that it is able to be set into rotation by withdrawing the same, characterised in that the gripping head (4) has a pair of clamping jaws (6), which are mounted in a slot (7) recessed on the end of the torsion rod (3), with a pin (13) of the torsion rod (3) projecting between the clamping jaws (6), and which clamping jaws are pressed against an inner cone (18) of the torsion rod (3) at the front end of the slot (7) by a spring (15) supported on the torsion rod (3) and thereby pressed against each other, whilst a sleeve (5) surrounding the end of the torsion rod (3) engages recesses (9) of the clamping jaws (6), so that a withdrawal of the clamping jaws (6) against the force of the spring (15) and corresponding to the formation of the inner contour of the clamping jaws (6) effects a spreading of the same by the pin (13).

2. Apparatus according to claim 1, characterised in that the torsion rod (3) has threads, which, by way of a ball race (30) fitted with balls (31), cooperate with single or multiple threads (29) of the hand tube (20), and with axial displacement of the hand tube (20) or an end tube (22) connected to the hand tube (20) impart a turn to the torsion rod (3).

3. An apparatus according to claim 2 characterised in that the threads are formed with a variable pitch, for example an increasing pitch.

4. An apparatus according to claim 1 or 2, characterised in that the torsion rod (3) is formed as a rotary tube and is connected with the one end (24') of a tension spring (24) arranged in its interior (17), with the other end (24'') of the tension spring (24) being connected to the hand tube (20) or to the end tube (22) connected to the hand tube.

## Revendications

1. Appareil en forme de tige pour fixer un arc façonné en fil métallique pour la correction de mauvaises positions de dents de la mâchoire humaine, à des plaques de support (crochets) qui sont attachées aux surfaces labiales ou linguales des dents au moyen d'un fil métallique de ligature (2) en torsadant les extrémités de ce dernier à l'aide d'une tête de serrage (4) attachée à l'extrémité avant d'une tige rotative (3) pour saisir le fil de ligature (2), la tige rotative (3) étant montée dans un tube à main (20) de telle sorte qu'en le retirant, on le déplace en rotation, caractérisé en ce que la tête de serrage (4) présente une paire de mâchoires de serrage (6) qui sont logées dans une fente (7) évidée à l'extrémité de la tige rotative (3), une broche (13) de la tige rotative (3) faisant saillie entre les mâchoires de serrage (6), et qui sont pressées par un ressort (15) s'appuyant sur la tige rotative (3), contre un cône interne (18) de la tige rotative (3) à l'extrémité avant de la fente (7) et sont ainsi pressées les unes contre les autres, tandis qu'un manchon (5) entourant l'extrémité de la tige rotative (3) vient s'engrener dans des évidements (9) pratiqués dans les mâchoires de serrage (6), si bien qu'un retrait des mâchoires de serrage (6) à l'encontre de la force exercée par le ressort (15) et, de manière correspondante à la configuration du contour interne des mâchoires de serrage (6), exerce un écartement de ces dernières à l'intervention de la broche (13).

2. Appareil selon la revendication 1, caractérisé en ce que la tige rotative (3) présente des pas de vis qui coopèrent, à l'intervention d'une cage à billes (30) garnie de billes (31), avec des pas de vis (29) uniques ou multiples du tube à main (20) et, lors du déplacement axial du tube à main (20) ou d'un tube terminal (22) relié au tube à main (20), procurent une rotation à la tige rotative (3).

3. Appareil selon la revendication 2, caractérisé en ce que les pas de vis sont réalisés avec un pas variable, par exemple avec un pas croissant.

4. Appareil selon la revendication 1 ou 2, caractérisé en ce que la tige rotative (3) est réalisée en forme de tube rotatif et est reliée à une première extrémité (24') d'un ressort de traction (24) disposé à l'intérieur (17), l'autre extrémité (24'') du ressort de traction (24) étant reliée au tube à main (20) ou au tube terminal (22) relié au tube à main.
